# EUROPÄISCHE PATENTSCHRIFT

(11) **EP 2 411 269 B1**
(45) Veröffentlichungstag und Bekanntmachung des Hinweises auf die Patenterteilung: **24.07.2019**
(21) Anmeldenummer: 10711352.4
(22) Anmeldetag: 29.03.2010
(51) Int. Cl.: B64C 9/22, B64C 9/16, B64C 9/02

(54) **TRAGFLÜGEL MIT EINER HOCHAUFTRIEBSKLAPPE**
AEROFOIL COMPRISING A HIGH LIFT FLAP
SURFACE PORTANTE À VOLET HYPERSUSTENTATEUR

(30) Priorität: 27.03.2009 DE 102009015330; 27.03.2009 US 164147 P
(43) Veröffentlichungstag der Anmeldung: 01.02.2012
(73) Patentinhaber: Airbus Operations GmbH, 21129 Hamburg (DE)
(72) Erfinder: SCHLIPF, Bernhard, 28201 Bremen (DE); HUE, Xavier, 28209 Bremen (DE)
(74) Vertreter: Bird & Bird LLP
(86) Internationale Anmeldenummer: PCT/EP2010/001984
(87) Internationale Veröffentlichungsnummer: WO 2010/108699

(56) Entgegenhaltungen:
- EP-A2- 1 764 303
- DE-B3- 10 328 717
- GB-A- 2 402 914
- US-A- 2 973 925

## Beschreibung

Die Erfindung betrifft einen Tragflügel mit einem Hauptflügel und einer an diesem bewegbar angeordneten Hochauftriebsklappe.

Die DE 103 28 717 B3 beschreibt eine Betätigungseinrichtung zur Verstellung einer Hinterkantenklappe eines Flugzeugs gegenüber einem Hauptflügel desselben. Die Betätigungsein-richtung ist aus zwei Pyramidengetriebeanordnungen gebildet, die jeweils zwei mechanisch hintereinander geschaltete Pyramidengetriebe aufweisen. Von diesen ist ein erstes Pyramidengetriebe mit der tragenden Struktur des Flügels und ein zweites Pyramidengetriebe mit der Hinterkantenklappe verbunden.

Aus der DE 10 2005 044 549 B4 ist ein Tragflügel mit einem Hauptflügel und einer Hochauftriebsklappe bekannt, die mittels zumindest zweier in der Spannweitenrichtung des Tragflügels nebeneinander angeordneten Verstellmechanismen an dem Tragflügel bewegbar angeordnet ist, wobei jeder der Verstellmechanismen aus miteinander gelenkig verbundenen Hebeln unter Ausbildung von drei Gelenkachsen gebildet ist, deren Richtungen sich in einem gemeinsamen Pol treffen.

Aufgabe der Erfindung ist, einen Tragflügel mit einem Hauptflügel und einer an diesem bewegbar angeordnete Hochauftriebsklappe bereitzustellen, deren Verstellvorrichtung kinematisch optimiert ist.

Diese Aufgabe wird mit den Merkmalen des Patentanspruchs 1 gelöst. Weitere Ausführungsformen sind in den auf diesen rückbezogenen Unteransprüchen angegeben.

Erfindungsgemäß ist insbesondere ein Tragflügel mit einem Hauptflügel und einer Hochauftriebsklappe vorgesehen, die mittels zumindest zwei in der Spannweitenrichtung des Tragflügels nebeneinander angeordneten und mittels einer Antriebsvorrichtung verstellbaren Verstellmechanismen an dem Tragflügel bewegbar angeordnet ist. Jeder der Verstellmechanismen weist auf:
- einen ersten Verstellhebel, der über ein erstes Drehgelenk unter Ausbildung einer ersten Drehachse an dem Hauptflügel angelenkt ist,
- einen zweiten Verstellhebel, der über ein zweites Drehgelenk unter Ausbildung einer zweiten Drehachse an der Hochauftriebsklappe angelenkt ist,
- ein mittleres Gelenk, der den ersten und den zweiten Verstellhebel unter Ausbildung einer dritten Drehachse gelenkig miteinander verbindet.

Die erste, zweite und dritte Drehachse verläuft dabei durch einen gemeinsamen Pol, der bei dem Verstellen der Hochauftriebsklappe in Bezug auf die Lage des Hauptflügels fix ist.

Nach einer Ausführungsform der Erfindung ist vorgesehen, dass an zumindest einem der Verstellmechanismen ein Gelenk-Zwischenteil mit einem Grundkörper und zumindest einer ersten und einer in Querrichtung des Grundkörpers beabstandeten zweiten Achsaufnahme angeordnet und derart ausgebildet ist, dass zwei entlang der Längsrichtung des Grundkörpers verlaufende Achsenteile in Querrichtung des Grundkörpers voneinander beabstandet drehbar aufgenommen werden.

Nach einer alternativen Ausführungsform der Erfindung ist vorgesehen, dass das Gelenk-Zwischenteil mit der ersten Achsaufnahme ein erstes Achsenteil unter Ausbildung der ersten Drehachse und mit der zweiten Achsaufnahme ein viertes Achsenteil unter Ausbildung einer vierten Drehachse zur Kopplung des ersten Verstellhebels und des Hauptflügels drehbar an das Gelenk-Zwischenteil lagert, wobei zwischen der ersten Drehachse und der vierten Achse ein Achsabstand besteht.

Alternativ dazu kann vorgesehen sein, dass das Gelenk-Zwischenteil mit der ersten Achsaufnahme ein zweites Achsenteil unter Ausbildung der zweiten Drehachse und mit der zweiten Achsaufnahme ein viertes Achsenteil unter Ausbildung einer vierten Drehachse zur Kopplung des zweiten Verstellhebels und der Hochauftriebsklappe an das Gelenk-Zwischenteil mit einem Achsabstand zwischen der zweiten Drehachse und der vierten Achse drehbar lagert.

Bei diesen Ausführungsbeispielen kann vorgesehen sein, dass der Grundkörper einstückig gebildet ist. Alternativ dazu kann vorgesehen sein, dass der Grundkörper zweistückig aus zwei Zwischenhebeln gebildet ist, wobei beide Zwischenhebel jeweils ein Paar von Achsaufnehmern aufweist.

Nach einem Ausführungsbeispiel der Erfindung ist vorgesehen, dass das Gelenk-Zwischenteil derart ausgebildet ist, dass die erste Drehachse und die vierte Drehachse oder zweite Drehachse und die jeweils vierte Drehachsejeweils parallel zueinander verlaufen.

Nach einem weiteren erfindungsgemäßen Ausführungsbeispiel ist vorgesehen, dass das Gelenk-Zwischenteil aus einem Grundkörper und daran angeordneten zwei Paaren von Achsaufnahmen mit jeweils einer ersten und einer zweiten Achsaufnahme jeweils zur Ausbildung eines Drehlagers mit einer Achse gebildet ist, wobei die jeweils ersten Achsaufnahmen ein Achsteil zur Ausbildung der ersten Drehachse oder der zweiten Drehachse drehbar aufnimmt und wobei die jeweils zweiten Achsaufnahmen Achsteile zur Ausbildung der jeweils vierten Drehachse drehbar aufnimmt und die erste und die zweite Achsaufnahme jeweils eines Paares von Achsaufnahmen voneinander in der Querrichtung des Gelenk-Zwischenteils zur Ausbildung des Achsabstands zwischen den jeweiligen Drehachsen beabstandet sind.

Dabei können die Achsaufnahmen des Gelenk-Zwischenteils in der Längsrichtung desselben zueinander versetzt angeordnet sein.

Nach einem weiteren erfindungsgemäßen Ausführungsbeispiel ist vorgesehen, dass der Grundkörper des Gelenk-Zwischenteils aus zwei sich entlang der Querrichtung erstreckenden Zwischenhebeln gebildet ist, wobei: der erste Zwischenhebel ein Paar von Achsaufnahmen mit einer ersten und einer zweiten jeweils als sphärische Lager ausgebildete Achsaufnahme jeweils zur Aufnahme eines Achsabschnitts aufweist, um das Gelenk-Zwischenteil an einem ersten Ende an die Hochauftriebsklappe oder den Hauptflügel und an einem zweiten Ende an den ersten Verstellhebel oder den zweiten Verstellhebel zu koppeln, und wobei der zweite Zwischenhebel an dem ersten Ende drehfest mit der Hochauftriebsklappe oder dem Hauptflügel verbunden ist und an dem zweiten Ende eine als sphärisches Lager ausgebildete Achsaufnahme aufweist, mit der das zweite Ende des zweiten Zwischenhebels mit einem Achsabschnitt des ersten Verstellhebels oder des zweiten Verstellhebels gekoppelt ist.

Nach einem weiteren erfindungsgemäßen Ausführungsbeispiel ist vorgesehen, dass der Grundkörper des Gelenk-Zwischenteils aus zwei sich entlang der Querrichtung erstreckenden Zwischenhebeln gebildet ist, wobei: der erste Zwischenhebel ein Paar von Achsaufnahmen mit einer ersten und einer zweiten jeweils als sphärische Lager ausgebildete Achsaufnahme jeweils zur Aufnahme eines Achsabschnitts aufweist, um das Gelenk-Zwischenteil an einem ersten Ende an den ersten Verstellhebel oder den zweiten Verstellhebel und an einem zweiten Ende an die Hochauftriebsklappe oder den Hauptflügel zu koppeln, und wobei der zweite Zwischenhebel an dem ersten Ende drehfest mit dem ersten Verstellhebel oder dem zweiten Verstellhebel verbunden ist und an dem zweiten Ende eine als sphärisches Lager ausgebildete Achsaufnahme aufweist, mit der das zweite Ende des zweiten Zwischenhebels mit einem Achsabschnitt der Hochauftriebsklappe oder des Hauptflügels gekoppelt ist.

Nach einem weiteren erfindungsgemäßen Ausführungsbeispiel ist vorgesehen, dass der Grundkörper des Gelenk-Zwischenteils aus zwei sich entlang der Querrichtung erstreckenden Zwischenhebeln gebildet ist, wobei: der erste Zwischenhebel in der Querrichtung voneinander beabstandete Achsaufnahmen mit einer ersten und einer zweiten jeweils als sphärisches Lager ausgebildeten Achsaufnahme jeweils zur drehbaren Aufnahme eines Achsabschnitts aufweist, wobei das Gelenk-Zwischenteil an einem ersten Ende mit einem Achsabschnitt der Hochauftriebsklappe oder einen Achsabschnitt des Hauptflügels und an einem zweiten Ende mit einem Achsabschnitt des ersten Verstellhebels oder des zweiten Verstellhebels gekoppelt ist, und wobei der zweite Zwischenhebel ein Paar von in der Querrichtung voneinander beabstandete Achsaufnahmen mit zumindest einer ersten als sphärisches Lager ausgebildeten Achsaufnahme und zumindest einer zweiten als nicht-sphärisches Lager ausgebildeten Achsaufnahme jeweils zur drehbaren Aufnahme eines Achsabschnitts aufweist, wobei das Gelenk-Zwischenteil an einem ersten Ende mit einem Achsabschnitt der Hochauftriebsklappe oder einen Achsabschnitt des Hauptflügels und an einem zweiten Ende mit einem Achsabschnitt des ersten Verstellhebels oder des zweiten Verstellhebels gekoppelt ist.

Dabei kann insbesondere vorgesehen sein, dass der zweite Zwischenhebel des Gelenk-Zwischenteils in der Querrichtung voneinander beabstandete Achsaufnahmen mit einer ersten Achsaufnahme und zwei zweiten Achsaufnahmen, die jeweils als nicht-sphärische Lager und zur drehbaren Aufnahme eines Achsabschnitts ausgebildet sind, wobei das Gelenk-Zwischenteil an einem ersten Ende mit einem Achsabschnitt der Hochauftriebsklappe oder einen Achsabschnitt des Hauptflügels und an einem zweiten Ende mit einem Achsabschnitt des ersten Verstellhebels oder des zweiten Verstellhebels gekoppelt ist.

Auch kann vorgesehen sein, dass der zweite Zwischenhebel des Gelenk-Zwischenteils in der Querrichtung voneinander beabstandete Achsaufnahmen mit zwei ersten Achsaufnahme und einer zweiten Achsaufnahme, die jeweils als nicht-sphärische Lager und zur drehbaren Aufnahme eines Achsabschnitts ausgebildet sind, wobei das Gelenk-Zwischenteil an einem ersten Ende mit einem Achsabschnitt der Hochauftriebsklappe oder einen Achsabschnitt des Hauptflügels und an einem zweiten Ende mit einem Achsabschnitt des ersten Verstellhebels oder des zweiten Verstellhebels gekoppelt ist.

Die Hochauftriebsklappe kann insbesondere ein Vorflügel sein. Weiterhin kann der Vorflügel eine Krügerklappe sein, die in seiner eingefahrenen Stellung an der Unterseite des Hauptflügels gelegen ist. Auch kann der Vorflügel ein Slat sein. Alternativ dazu kann nach der Erfindung vorgesehen sein, dass die Hochauftriebsklappe eine Hinterkanten-Klappe ist.

Die Antriebsvorrichtung kann erfindungsgemäß aus einem Linearantrieb gebildet sein. Alternativ dazu kann die Antriebsvorrichtung aus einem Drehantrieb gebildet sein.

Nach einem weiteren erfindungsgemäßen Ausführungsbeispiel ist vorgesehen, dass der Tragflügel eine Anschlagvorrichtung zur Begrenzung der maximalen Ausfahrstellung der Hochauftriebsklappe aufweist und die Anschlagvorrichtung mit einem zwischen dem ersten und dem zweiten Verstellhebel wirkenden Anschlaghebel gebildet ist, der einstückig mit dem ersten Verstellhebel oder mit dem zweiten Verstellhebel und als Verlängerung desselben in Richtung zur zweiten Achse oder zur ersten Achse gebildet ist und der derart gestaltet ist, dass das freie Ende des Anschlagshebels in eine Anschlagstellung mit einer Auflagevorrichtung am zweiten Verstellhebel oder am ersten Verstellhebel gebracht werden kann, um die maximale Ausfahrstellung des jeweiligen Verstellmechanismus zu definieren.

Weiterhin kann nach einem weiteren erfindungsgemäßen Ausführungsbeispiel vorgesehen sein, dass der Tragflügel eine Anschlagvorrichtung zur Begrenzung der maximalen Ausfahrstellung der Hochauftriebsklappe aufweist und die Anschlagvorrichtung mit einem Anschlaghebel zur Begrenzung der maximalen Ausfahrstellung der Hochauftriebsklappe gebildet ist, der einstückig mit dem ersten Verstellhebel oder mit einem Beschlag des Hauptflügels und als Verlängerung desselben in Richtung zu dem Beschlag des Hauptflügels oder zum dritten Gelenk gebildet ist und der derart gestaltet ist, dass das freie Ende des Anschlagshebels in eine Anschlagstellung mit dem Beschlag des Hauptflügels oder dem ersten Verstellhebel gebracht werden kann, um die maximale Ausfahrstellung des jeweiligen Verstellmechanismus zu definieren.

Erfindungsgemäß kann auch vorgesehen sein, dass der Tragflügel eine Anschlagvorrichtung zur Begrenzung der maximalen Ausfahrstellung der Hochauftriebsklappe aufweist und die Anschlagvorrichtung mit einem Anschlaghebel zur Begrenzung der maximalen Ausfahrstellung der Hochauftriebsklappe gebildet ist, der einstückig mit dem zweiten Verstellhebel oder mit einem Beschlag der Hochauftriebsklappe und als Verlängerung desselben in Richtung zu dem Beschlag der Hochauftriebsklappe oder zum dritten Gelenk gebildet ist und der derart gestaltet ist, dass das freie Ende des Anschlagshebels in eine Anschlagstellung mit dem Beschlag der Hochauftriebsklappe oder dem zweiten Verstellhebel gebracht werden kann, um die maximale Ausfahrstellung des jeweiligen Verstellmechanismus zu definieren.

Die Anschlagvorrichtung kann isnbesondere derart ausgeführt sein, dass mit dieser eine maximale Ausfahrstellung des Vorflügels begrenzt wird, bei der die Wirkungsrichtungen der Verstellhebel zueinander einen Winkel (alpha) von weniger als 180 Grad haben. Auch kann vorgesehen sein, dass mit dem Anschlagshebel eine Federvorrichtung zusammenwirkt, um eine Rückstellkraft auf den Verstellmechanismus auszuüben und/oder das Erreichen der maximalen Ausfahrstellung des jeweiligen Verstellmechanismus abzufedern.

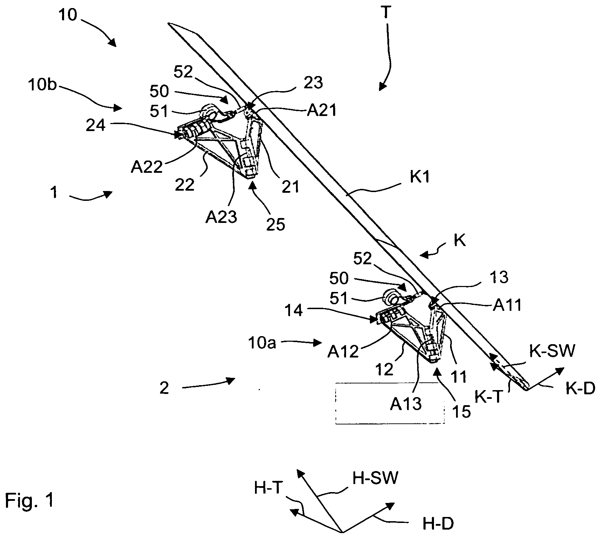

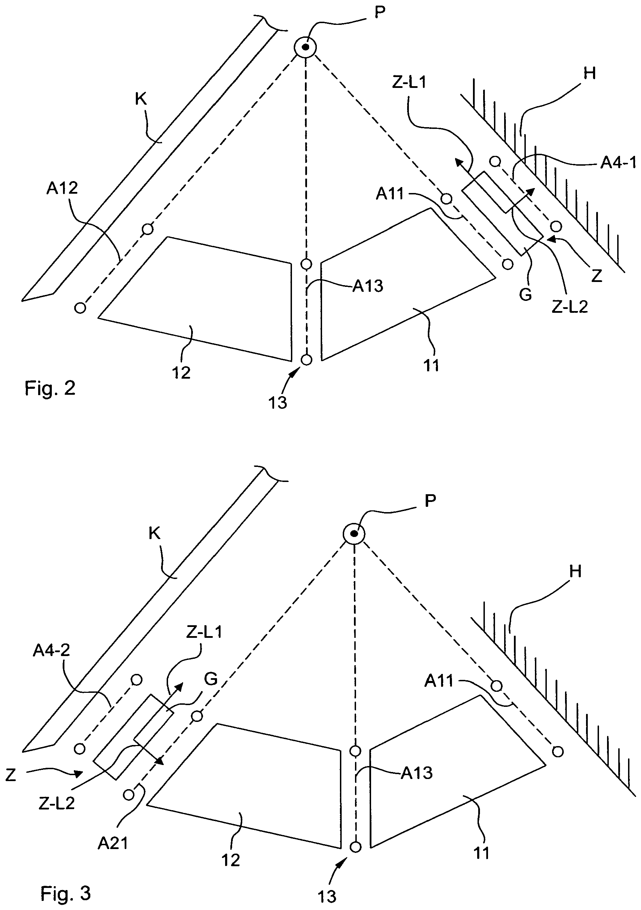

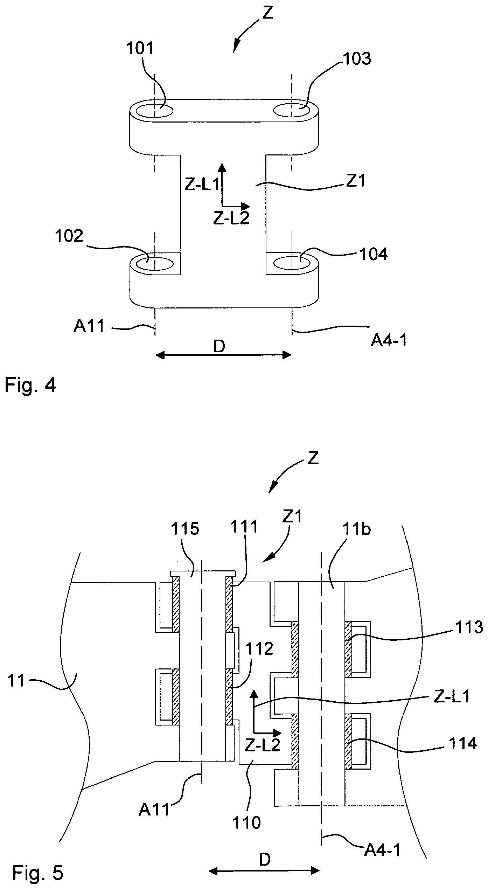

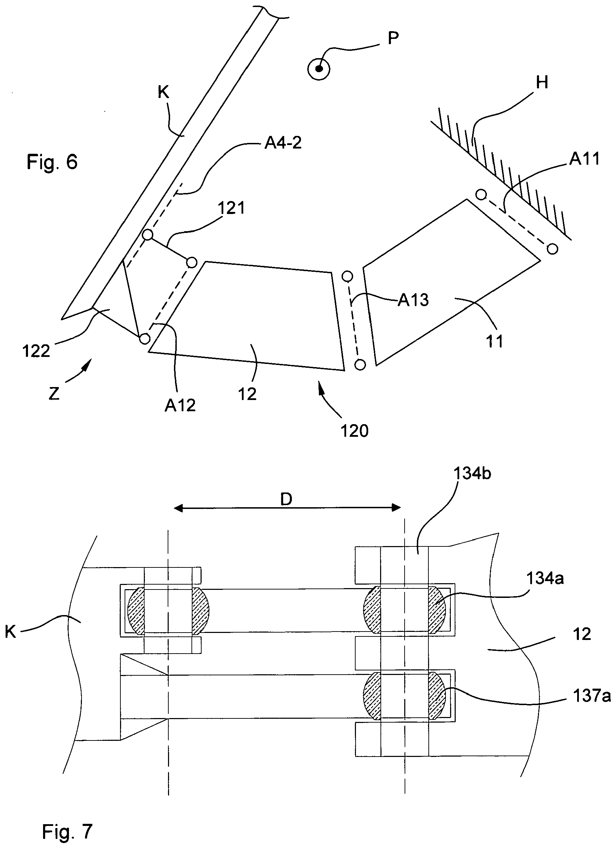

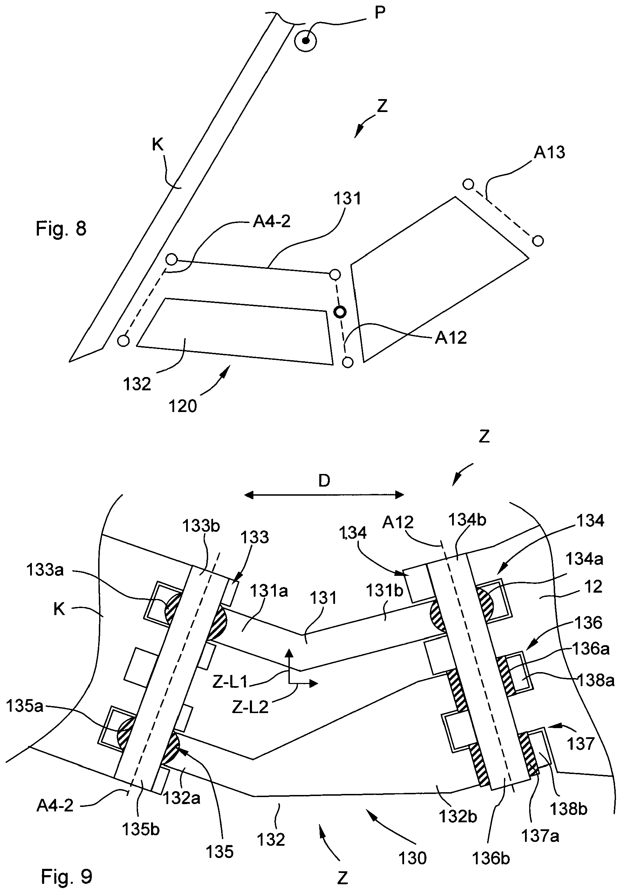

Im Folgenden werden Ausführungsbeispiele der Erfindung an Hand der beigefügten Figuren beschrieben, die zeigen:
▪ Figur 1 eine schematische perspektivische Darstellung eines Ausführungsbeispiels einer an einem Hauptflügel eines erfindungsgemäßen Tragflügels anzuordnenden Hochauftriebsklappe in Form eines Vorflügels, der mittels zwei Verstellmechanismen an dem Hauptflügel bewegbar angeordnet ist, wobei in der Darstellung der Figur 1 die Verstellmechanismen ohne einem erfindungsgemäß vorgesehenen Gelenk-Zwischenteil dargestellt sind,
▪ Figur 2 eine schematische Darstellung eines erfindungsgemäßen Ausführungsbeispiels eines der Verstellmechanismen mit zwei Hebeln und einem Gelenk-Zwischenteil in einer ausgefahrenen Stellung in einer Seitenansicht, wobei bei dem dargestellten Ausführungsbeispiel das Gelenk-Zwischenteil mittels zwei Paaren von Scharniergelenken zwischen einem Verstellhebel und dem Hauptflügel angelenkt ist,
▪ Figur 3 eine schematische Darstellung eines zu dem in der Figur 2 dargestellten Ausführungsbeispiel alternativen Ausführungsbeispiels eines der Verstellmechanismen in einer ausgefahrenen Stellung in einer Draufsicht, wobei bei dem dargestellten Ausführungsbeispiel das Gelenk-Zwischenteil mittels zwei Paaren von Scharniergelenken zwischen einem Verstellhebel und der Hochauftriebsklappe angelenkt ist,
▪ Figur 4 eine schematische Perspektivdarstellung eines Ausführungsbeispiels des Gelenk-Zwischenteils, das für einen Verstellmechanismus nach den Figuren 2 oder 3 verwendet werden kann,
▪ Figur 5 eine schematische Perspektivdarstellung eines weiteren Ausführungsbeispiels des Gelenk-Zwischenteils, das für einen Verstellmechanismus nach den Figuren 2 oder 3 verwendet werden kann,
▪ Figur 6 eine schematische Darstellung eines erfindungsgemäßen Ausführungsbeispiels eines der Verstellmechanismen mit zwei Hebeln und einem Gelenk-Zwischenteil in einer ausgefahrenen Stellung in einer Draufsicht, wobei bei dem dargestellten Ausführungsbeispiel das Gelenk-Zwischenteil mittels zwei Paaren von Scharniergelenken zwischen einem Verstellhebel und der Hochauftriebsklappe angelenkt ist, wobei das Gelenk-Zwischenteil aus einem ersten Zwischenhebel, der an seinen Enden über jeweils ein Drehgelenk mit einem Verstellhebel und der Hochauftriebsklappe gekoppelt ist, und einem zweiten Zwischenhebel gebildet ist, der an der Hochauftriebsklappe drehfest verbunden und mit einem zweiten Ende über ein Drehgelenk mit einem Verstellhebel gekoppelt ist,
▪ Figur 7 eine schematische Perspektivdarstellung eines Ausführungsbeispiels des Gelenk-Zwischenteils, das für einen Verstellmechanismus nach der Figur 6 verwendet werden kann,
▪ Figur 8 eine schematische Darstellung eines erfindungsgemäßen Ausführungsbeispiels eines der Verstellmechanismen mit zwei Hebeln und einem Gelenk-Zwischenteil in einer ausgefahrenen Stellung in einer Draufsicht, wobei bei dem dargestellten Ausführungsbeispiel das Gelenk-Zwischenteil mittels zwei Paaren von Scharniergelenken zwischen einem Verstellhebel und der Hochauftriebsklappe angelenkt ist, wobei das Gelenk-Zwischenteil aus einem ersten Zwischenhebel, der an seinen Enden über jeweils ein sphärisches Drehgelenk mit einem Verstellhebel und der Hochauftriebsklappe gekoppelt ist, und einem zweiten Zwischenhebel gebildet ist, der an seinem ersten Enden über ein sphärisches Drehgelenk und an seinem zweiten Ende über zumindest ein nicht-sphärisches Drehgelenk mit einem Verstellhebel und der Hochauftriebsklappe gekoppelt ist,
▪ Figur 9 eine schematische Perspektivdarstellung eines Ausführungsbeispiels des Gelenk-Zwischenteils, das für einen Verstellmechanismus nach der Figur 8 verwendet werden kann,
   - Figur 10 eine Schnittdarstellung eines Ausführungsbeispiels einer Anschlagvorrichtung zur Begrenzung der maximalen Ausfahrstellung des Vorflügels,
   - Figur 11 eine Schnittdarstellung eines weiteren Ausführungsbeispiels einer Anschlagvorrichtung zur Begrenzung der maximalen Ausfahrstellung des Vorflügels.

Die Figur 1 stellt in schematischer Weise ein Ausführungsbeispiel des erfindungsgemäßen Tragflügels T mit einem Hauptflügel H einer Hochauftriebsklappe K dar. Die Hochauftriebsklappe K ist mittels einer Verstellvorrichtung 10 mit zumindest zwei Verstellmechanismen 10a, 10b an dem Hauptflügel H angeordnet, die In der Spannweitenrichtung H-SW des Hauptflügels H oder in der Spannweitenrichtung K-SW der Hochauftriebsklappe K nebeneinander angeordnet sind. Die Hochauftriebsklappe K kann erfindungsgemäß ein Vorflügel K1 oder eine Hinterkanten-Klappe sein.

In der Figur 1 ist die Hochauftriebsklappe K ein Vorflügel K1, der als Slat ausgebildet ist. Erfindungsgemäß kann der Vorflügel K1 auch eine Krüger-Klappe sein, die in seiner eingefahrenen Stellung an der Unterseite des Hauptflügels H gelegen ist. Der Vorflügel K1 ist in der Figur 1 in einer ausgefahrenen Stellung dargestellt. In der Figur 1 sind zur Veranschaulichung des erfindungsgemäßen Funktionsprinzips an dem dargestellten Ausschnitt des Hauptflügels H und des Vorflügels K1 zwei Verstellmechanismen 10a, 10b dargestellt. Auch ist in der Figur 1 ein Koordinatensystem für den Hauptflügel H mit der Hauptflügel-Spannweitenrichtung H-SW, der Hauptflügel-Tiefenrichtung H-T und der Hauptflügel-Dickenrichtung H-D als Koordinatenachsen sowie Koordinatensystem für die Hochauftriebsklappe K mit der Hochauftriebsklappen-Spannweitenrichtung K-SW, der Hochauftriebsklappen-Tiefenrichtung K-T und der Hochauftriebsklappen-Dickenrichtung K-D als Koordinatenachsen eingetragen.

Die Hochauftriebsklappe bzw. der Vorflügel ist mittels zumindest zwei Verstellmechanismen an dem Hauptflügel zwischen einer eingefahrenen und einer ausgefahrenen Stellung bewegbar angeordnet. In der Figur 1 ist der dargestellte Vorflügel in einer ausgefahrenen Stellung gezeigt, wobei die dargestellte Ausfahrstellung nicht die maximale Ausfahrstellung der Hochauftriebsklappe K bzw. des Vorflügels K1 ist.

Wie aus der Figur 1 ersichtlich ist, weist der erste Verstellmechanismus 10a der Versteilvorrichtung 10 auf:
- einen ersten Verstellhebel 11, der über ein erstes Drehgelenk 13 unter Ausbildung einer ersten Drehachse A11 an der Hochauftriebsklappe K bzw. dem Vorflügel K1 angelenkt ist, wobei die Drehachse A11 des ersten Drehgelenks 13 quer oder winklig zur Hauptflügel-Spannweitenrichtung H-SW und Hauptflügel-Tiefenrichtung H-T verläuft,
- einen zweiten Verstellhebel 12, der über ein zweites Drehgelenk 14 unter Ausbildung einer zweiten Drehachse A12 an dem Hauptflügel H angelenkt ist, wobei die Drehachse A12 des zweiten Drehgelenks 14 quer oder winklig zur Hochauftriebsklappen-Spannweitenrichtung K-SW und Hochauftriebsklappen-Dickenrichtung K-D verläuft,
- ein mittleres Gelenk 15, das den ersten 11 und den zweiten 12 Verstellhebel unter Ausbildung einer dritten Drehachse A13 gelenkig miteinander verbindet.

Erfindungsgemäß treffen sich die Richtungen der ersten, zweiten und dritten Drehachse A11, A12 bzw. A13 des ersten Verstellmechanismus 10a in einem gemeinsamen Pol P, der bei dem Verstellen der Hochauftriebsklappe K in Bezug auf die Lage des Hauptflügels fix, d.h. unabhängig von der Hochauftriebsklappe K bzw. des Vorflügels K1 ist. Dadurch führt die Hochauftriebsklappe K gegenüber dem Hauptflügel H eine Bewegung mit einer teilkreisförmigen Bewegungsbahn auf, wenn diese von ihrer eingefahrenen in die ausgefahrene Stellung und umgekehrt bewegt wird.

Wie aus der Figur 1 weiterhin ersichtlich ist, weist der zweite Verstellmechanismus 10b der Verstellvorrichtung 10 auf:
- einen ersten Verstellhebel 21, der über ein erstes Drehgelenk 23 unter Ausbildung einer ersten Drehachse A21 an der Hochauftriebsklappe K bzw. dem Vorflügel K1 angelenkt ist, wobei die Drehachse A21 des ersten Drehgelenks 23 quer oder winklig zur Hauptflügel-Spannweitenrichtung H-SW und Hauptflügel-Tiefenrichtung H-T verläuft,
- einen zweiten Verstellhebel 22, der über ein zweites Drehgelenk 24 unter Ausbildung einer zweiten Drehachse A22 an dem Hauptflügel H angelenkt ist, wobei die Drehachse A22 des zweiten Drehgelenks 24 quer oder winklig zur Hochauftriebsklappen-Spannweitenrichtung K-SW und Hochauftriebsklappen-Dickenrichtung K-D verläuft,
- ein mittleres Gelenk 25, das den ersten 21 und den zweiten 22 Verstellhebel unter Ausbildung einer dritten Drehachse A23 gelenkig miteinander verbindet.

Erfindungsgemäß treffen sich die Richtungen der ersten, zweiten und dritten Drehachse A1, A2 bzw. A3 des zweiten Verstellmechanismus 10b in einem gemeinsamen Pol P, der bei dem Verstellen der Hochauftriebsklappe K in Bezug auf die Lage des Hauptflügels fix, d.h. unabhängig von der Hochauftriebsklappe K bzw. des Vorflügels K1 ist.

in der Figur 2 ist beispielartig der erste Verstellmechanismus 10a in schematischer Weise zur Veranschaulichung des kinematischen Konzepts veranschaulicht ist.

Der Antrieb der Verstellvorrichtung zu deren Verstellung kann erfindungsgemäß in verschiedener Weise ausgeführt sein. Die Antriebsvorrichtung 50 kann generell z.B. aus einem Linearantrieb oder aus einem Drehantrieb gebildet sein. Dabei kann insbesondere vorgesehen sein,
- dass der Tragflügel T eine Antriebsvorrichtung 50 mit einem am Hauptflügel H gelagerten Antriebsmodul 51 und einem zu diesem bewegbaren Antriebshebel 52 aufweist, der an der Hochauftriebsklappe K angekoppelt ist, und
- dass der Tragflügel T eine Anschlagvorrichtung 60 zur Begrenzung der maximalen Ausfahrstellung der Hochauftriebsklappe K bzw. des Vorflügels K1 aufweist.

Alternativ kann vorgesehen sein, dass die Antriebsvorrichtung auf einen der Verstellhebel wirkt und diesen verstellt, um die Verstellvorrichtung zu verstellen. Dabei kann vorgesehen sein, dass die Antriebsvorrichtung als Linearantrieb ausgebildet ist und an den Gelenken des ersten und zweiten Verstellmechanismus angekoppelt sein, mit jeweils den ersten und den zweiten Verstellhebel eine Verstellmechanismus miteinander gelenkig verbinden. Auch kann vorgesehen sein, dass die Antriebsvorrichtung als Linearantrieb ausgebildet ist und zwischen zwei Verstellhebeln verschiedener Verstellmechanismen 1, 2 angeordnet und an diesen angekoppelt ist. Durch Auseinanderfahren und Zusammenfahren (Kontrahieren) des Linearantriebs der Antriebsvorrichtung werden die beiden durch diesen gekoppelten Verstellhebel auseinander bzw. zusammen gedrückt und dabei die Verstellvorrichtung in einen eingefahrenen bzw. ausgefahrenen Zustand bewegt. Dabei kann die Antriebsvorrichtung zwischen einem ersten Verstellhebel des ersten Verstellmechanismus und einem zweiten Verstellhebel des zweiten Verstellmechanismus und umgekehrt angekoppelt sein.

Erfindungsgemäß wird bei zumindest einem Verstellmechanismus 10a, 10b einer Verstellvorrichtung 10 ein Gelenk-Zwischenteil Z mit einem Grundkörper Z1 verwendet. Insbesondere wird das Gelenk-Zwischenteil Z an genau einem Verstellmechanismus 10a, 10b einer Verstellvorrichtung 10 verwendet.

Der Grundkörper Z1 kann einteilig oder mehrteilig und dabei insbesondere zweiteilig ausgebildet sein. Der Grundkörper Z1 weist zumindest ein Paar von Achsaufnahmen auf, die in einer Querrichtung Z-L2 gesehen voneinander beabstandet angeordnet und derart ausgebildet sind, dass zwei entlang der quer zur Querrichtung Z-L2 verlaufenden Längsrichtung Z-L1 des Grundkörpers G verlaufende Achsenteile in Querrichtung des Grundkörpers G voneinander beabstandet drehbar aufgenommen werden. Die Achsenteile sind je nach dem Ausführungsbeispiel des Verstellmechanismus und der Anordnung des Gelenk-Zwischenteils Z in demselben Achsenteile zur Verbindung des Gelenk-Zwischenteils Z mit dem Hauptflügel H (Figur 2) oder mit der Hochauftriebsklappe (Figur 3) auf einer Seite des Gelenk-Zwischenteils Z und mit dem ersten 11, 21 bzw. zweiten 12, 22 Verstellhebel auf der anderen Seite des Gelenk-Zwischenteils Z vorgesehen. Auf diese Weise ist zwischen dem zweiten

Verstellhebel 12 und der Hochauftriebsklappe K oder zwischen dem ersten Verstellhebel 11 und dem Hauptflügel H ein erfindungsgemäßes Gelenk-Zwischenteil Z vorgesehen.

Ausgehend von einer solchen Anordnung lagert dabei das Gelenk-Zwischenteil Z mit zumindest einer ersten Achsaufnahme jeweils drehbar ein erstes Achsenteil unter Ausbildung der ersten Drehachse A11, A21 und mit der zweiten Achsaufnahme ein viertes Achsenteil unter Ausbildung einer vierten Drehachse A4-1 zur Kopplung des ersten Verstellhebels 11, 21 und des Hauptflügels H an das Gelenk-Zwischenteil Z mit einem Achsabstand D zwischen der ersten Drehachse A11, A21 und der vierten Achse A4-1. Alternativ dazu lagert ausgehend von einer solchen Anordnung das Gelenk-Zwischenteil Z mit der ersten Achsaufnahme ein zweites Achsenteil unter Ausbildung der zweiten Drehachse A12, A22 und mit der zweiten Achsaufnahme ein viertes Achsenteil unter Ausbildung einer vierten Drehachse A4-2 zur Kopplung des zweiten Verstellhebels 12, 22 und der Hochauftriebsklappe K an das Gelenk-Zwischenteil Z mit einem Achsabstand D zwischen der zweiten Drehachse A12, A22 und der vierten Achse A4-2. Dabei kann das Gelenk-Zwischenteil Z derart ausgebildet sein, dass die erste Drehachse A11, A21 und die vierte Drehachse A4-1 oder zweite Drehachse A12, A22 und die jeweils vierte Drehachse A4-2 jeweils parallel zueinander verlaufen.

In der Figur 4 ist ein Ausführungsbeispiel des erfindungsgemäß vorgesehenen Gelenk-Zwischenteils Z dargestellt, das aus einem Grundkörper Z1 und einem daran angeordneten ersten Paar von Achsaufnahmen 101, 103 und einem zweiten Paar von Achsaufnahmen 102, 104 gebildet ist. Jedes Paar von Achsaufnahmen weist somit eine erste 101 bzw. 102 und eine zweite Achsaufnahme 103 bzw. 104 jeweils zur Ausbildung eines Drehlagers mit einer Achse (in der Figur 4 nicht dargestellt) auf. Die erste und zweite Achsaufnahme liegt in Bezug auf die Längsrichtung Z-L1 an zueinander entgegen gesetzt liegenden Seiten des Grundkörpers Z1. Die jeweils ersten Achsaufnahmen 101, 102 nehmen je nach der Anordnung des Gelenk-Zwischenteils Z in einem Verstellmechanismus 10a, 10b ein Achsteil zur Ausbildung der ersten Drehachse A11, A21 oder der zweiten Drehachse A12, A22 drehbar auf. In der Darstellung der Figur 4 ist eine Ausführungsform dargestellt, in der die ersten Achsaufnahmen 101, 102 ein Achsteil zur Ausbildung der ersten Drehachse A11 aufnehmen. Bei diesem Ausführungsbeispiel ist weiterhin vorgesehen, dass die jeweils zweiten Achsaufnahmen Achsteile zur Ausbildung der jeweils vierten Drehachse A4-1 oder A4-2 (je nach Anordnung in dem Verstellmechanismus) drehbar aufnehmen. In der Darstellung der Figur 4 ist eine Ausführungsform dargestellt, in der die zweiten Achsaufnahmen 103, 104 zur Aufnahme eines Achsteils zur Ausbildung der vierten Drehachse A4-1 zur Kopplung des Gelenk-Zwischenteils Z mit dem Hauptflügel H vorgesehen sind. Die erste und die zweite Achsaufnahme jeweils eines Paares von Achsaufnahmen sind voneinander in der Querrichtung des Gelenk-Zwischenteils Z zur Ausbildung des Achsabstands (D) zwischen den jeweiligen Drehachsen beabstandet (Figur 4). Die Achsaufnahmen sind bei dem in der Figur 4 dargestellten Ausführungsbeispiel als Scharnierlager, also insbesondere als nicht-sphärische Lager ausgebildet.

Nach einem weiteren Ausführungsbeispiel können dabei die Achsaufnahmen des Gelenk-Zwischenteils Z in der Längsrichtung desselben zueinander versetzt angeordnet sein (Figur 5). Die Figur 5 zeigt ein Gelenk-Zwischenteil Z, das an dem Hauptflügel H und einem ersten Verstellhebel 11 angekoppelt ist. Die ersten Achsaufnahmen 111, 112 koppeln das Gelenk-Zwischenteil Z mit dem Hauptflügel H und die zweiten Achsaufnahmen 113, 114 koppeln das Gelenk-Zwischenteil Z mit dem ersten Verstellhebel 11. Entlang der Längsrichtung Z-L1 des Gelenk-Zwischenteils Z gesehen ist die erste 111 oder 112 und die zweite Achsaufnahme 113 bzw. 114 jeweils eines Achsaufnahmen-Paares versetzt zueinander angeordnet. Dabei ist jeweils entlang der Längsrichtung Z-L1 des Gelenk-Zwischenteils Z gesehen eine zweite Achsaufnahme 113 zwischen den beiden ersten Achsaufnahmen 111, 112 und eine erste Achsaufnahme 112 zwischen den beiden zweiten Achsaufnahmen 113, 114 gelegen. Dadurch kann gegenüber der Ausführungsform der Figur 1 eine platzsparende Bauweise des Gelenk-Zwischenteil Z bei einer geforderten Festigkeit desselben erreicht werden. Bei dem Ausführungsbeispiel der Figur 5 wird mit den Achsaufnahmen oder Drehlagern 111 und 112 ein Achsabschnitt 115 und mit den mit den Achsaufnahmen oder Drehlagern 113 und 114 ein Achsabschnitt 116 drehbar gelagert.

Bei den Ausführungsformen der Figuren 4 und 5 sind die Achsaufnahmen derart gestaltet und angeordnet, dass die von diesen gelagerten Achsabschnitte Drehachsen haben, die parallel zueinander verlaufen. Alternativ können die Achsaufnahmen derart gestaltet und angeordnet sein, dass die von diesen gelagerten Achsabschnitte Drehachsen haben, die winklig, also nicht parallel zueinander verlaufen.

Die Achsaufnahmen sind bei den in den Figuren 4 und 5 dargestellten Ausführungsbeispielen als Scharnierlager, also insbesondere als nicht-sphärische Lager ausgebildet.

In der Figur 6 eine schematische Darstellung eines weiteren erfindungsgemäßen Ausführungsbeispiels eines der Verstellmechanismen mit zwei Verstellhebeln 11, 12 und einem Gelenk-Zwischenteil Z in der Ausführung 120 mit zwei Zwischenhebeln 121, 122 gezeigt. Bei dem dargestellten Ausführungsbeispiel ist das Gelenk-Zwischenteil 120 mittels zwei Paaren von Scharniergelenken zwischen einem Verstellhebel 12 und der Hochauftriebsklappe K angelenkt. Dabei ist das Gelenk-Zwischenteil 120 aus einem ersten Zwischenhebel 121, der an seinen Enden über jeweils ein Drehgelenk 123, 124 mit einem zweiten Verstellhebel 12 und der Hochauftriebsklappe K gekoppelt ist, und einem zweiten Zwischenhebel 122 gebildet, der an einem ersten Ende 122a mit der Hochauftriebsklappe K drehfest verbunden und mit einem zweiten Ende 122b über ein Drehgelenk 126 mit einem Verstellhebel 12 gekoppelt.

Die Figur 7 zeigt eine schematische Perspektivdarstellung eines Ausführungsbeispiels - 120 des Gelenk-Zwischenteils, das für einen Verstellmechanismus nach der Figur 6 verwendet werden kann. Bei dem Ausführungsbeispiel der Figur 7 weist der erste Zwischenhebel 121 an seinem ersten Ende 121a eine erste Achsaufnahme 123a zur Ausbildung eines ersten Drehgelenks 123 mit einem an der Hochauftriebsklappe K angeordneten Achsabschnitt 123b auf. Weiterhin weist der erste Zwischenhebel 121 an seinem zweiten Ende 121b eine zweite Achsaufnahme 124a zur Ausbildung eines zweiten Drehgelenks 124 mit einem an einem zweiten Verstellhebel 12 angeordneten Achsabschnitt 124b auf. Bei dem Ausführungsbeispiel der Figur 7 weist weiterhin der zweite Zwischenhebel 122 an seinem zweiten Ende 122b eine Achsaufnahme 126a zur Ausbildung eines Drehgelenks 126 mit einem an einem zweiten Verstellhebel 12 angeordneten Achsabschnitt 126b auf.

Die Drehgelenke 123, 124, 126 können insbesondere als sphärische Drehlager ausgebildet sein. Auf diese Weise kann kinematisch durch das Gelenk-Zwischenteil 120 ein zusätzlicher Freiheitsgrad bezüglich der Lagerung der Verstellmechanismen einer Verstellvorrichtung bereitgestellt werden, durch die Zwangskräfte in der Verstellvorrichtung aufgrund der Verformung des Hauptflügels und/oder der Hochauftriebsklappe K bei dem Auftreten äußerer Kräfte oder aufgrund der bei der Verstellung der Verstellvorrichtung mittels der Antriebsvorrichtung auftretenden Kräfte minimiert werden können. Dadurch können die Strukturteile der erfindungsgemäßen Verstellvorrichtung bzw. des erfindungsgemäßen Tragflügels T günstiger ausgelegt werden. Dieser Effekt tritt auch bei den weiteren erfindungsgemäßen Ausführungsbeispielen auf.

In analoger Weise kann das in den Figuren 6 und 7 dargestellte Ausführungsbeispiel eines Gelenk-Zwischenteils Z bzw. 120 auch zwischen dem ersten Hebel und dem Hauptflügel H angeordnet sein.

In der Figur 8 ist eine schematische Darstellung eines weiteren erfindungsgemäßen Ausführungsbeispiels eines ersten 10a der Verstellmechanismen 10a, 10b mit einem zweiten Verstellhebel 12 und einem Gelenk-Zwischenteil Z1 in einer ausgefahrenen Stellung in einer Draufsicht gezeigt. Bei dem dargestellten Ausführungsbeispiel ist das Gelenk-Zwischenteil Z1 mittels zwei Paaren von Scharniergelenken zwischen dem zweien Verstellhebel 12 und der Hochauftriebsklappe K angelenkt, wobei das Gelenk-Zwischenteil aus einem ersten Zwischenhebel 131, der an seinen Enden 131a, 131b über jeweils ein sphärisches Drehgelenk mit einem Verstellhebel und der Hochauftriebsklappe gekoppelt ist, und einem zweiten Zwischenhebel 132 gebildet ist, der an seinen Enden 132a, 132b über jeweils zumindest ein Drehgelenk mit einem Verstellhebel 12 und der Hochauftriebsklappe K gekoppelt ist. Der zweite Zwischenhebel 132 weist an seinem ersten Ende 132a ein sphärisches Lager 135 und an seinem zweiten Ende 132b ein nicht-sphärisches Lager jeweils zur Ankopplung des zweiten Zwischenhebels 132 an einen Achsabschnitt auf. Die Figur 9 zeigt eine schematische Perspektivdarstellung eines Ausführungsbeispiels 130 des Gelenk-Zwischenteils Z, das für einen Verstellmechanismus nach der Figur 8 verwendet werden kann.

Bei dem Ausführungsbeispiel der Figur 9 weist der erste Zwischenhebel 131 an seinem ersten Ende 131a eine erste Achsaufnahme 133a zur Ausbildung eines ersten Drehgelenks 133 mit einem an der Hochauftriebsklappe K angeordneten Achsabschnitt 133b auf. Weiterhin weist der erste Zwischenhebel 131 an seinem zweiten Ende 131b eine zweite Achsaufnahme 134a zur Ausbildung eines zweiten Drehgelenks 134 mit einem an einem zweiten Verstellhebel 12 angeordneten Achsabschnitt 134b auf. Die Drehgelenke 133 und 134 sind jeweils als sphärische Lager ausgebildet. Bei dem Ausführungsbeispiel der Figur 9 weist weiterhin der zweite Zwischenhebel 132 an seinem ersten Ende 135a eine erste Achsaufnahme 135a zur Ausbildung eines ersten Drehgelenks 135 mit einem an der Hochauftriebsklappe K angeordneten Achsabschnitt 135b auf. Das Drehgelenk 135 ist als sphärisches Lager ausgebildet. Weiterhin weist der zweite Zwischenhebel 132 an seinem zweiten Ende 137b zwei zweite Achsaufnahmen 136a, 137a zur Ausbildung jeweils zweiter Drehgelenke 136, 137 mit einem an einem zweiten Verstellhebel 12 angeordneten Achsabschnitt 136b auf. Die zwei zweite Achsaufnahmen 136a, 137a sind in der axialen Richtung des Achsabschnitt 136b, den diese aufnehmen, voneinander beabstandet angeordnet. Das zweite Ende kann insbesondere gabelförmig mit zwei Gabelteilen 138a, 138b ausgebildet sein, wobei an jeweils einem Gabelteil 138a, 138b eine Achsaufnahme 136a bzw. 137a angeordnet ist. Es kann vorgesehen sein, dass die Achsaufnahmen 136a, 138b und insbesondere die Achsaufnahmen 134, 138a, 137a jeweils einen einstückigen Achsabschnitt 134b, 136b aufnehmen. Die Drehgelenke 136 und 137 sind jeweils als Scharnierlager oder als nicht-sphärische Lager ausgebildet.

Durch die Ausbildung der Drehgelenke 133, 134 als sphärische Drehlager kann durch das Gelenk-Zwischenteil 130 ein zusätzlicher kinematischer Freiheitsgrad bezüglich der Lagerung der Verstellmechanismen einer Verstellvorrichtung bereitgestellt werden, durch die Zwangskräfte in der Verstellvorrichtung aufgrund der Verformung des Hauptflügels und/oder der Hochauftriebsklappe K bei dem auftretenden äußerer Kräfte oder aufgrund der bei der Verstellung der Verstellvorrichtung mittels der Antriebsvorrichtung minimiert werden können. Dadurch können die Strukturteile der Verstellvorrichtung bzw. des erfindungsgemäßen Tragflügels T günstiger ausgelegt werden.

In analoger Weise kann das in den Figuren 6 und 9 dargestellte Ausführungsbeispiel eines Gelenk-Zwischenteils Z bzw. 130 auch zwischen dem ersten Hebel und dem Hauptflügel H angeordnet sein.

Die Achsabschnitte zur Bildung einer Drehachse an einer Gelenkseite des Gelenk-Zwischenteils Z können generell auch als ein einstückiger Achsabschnitt ausgebildet sein.

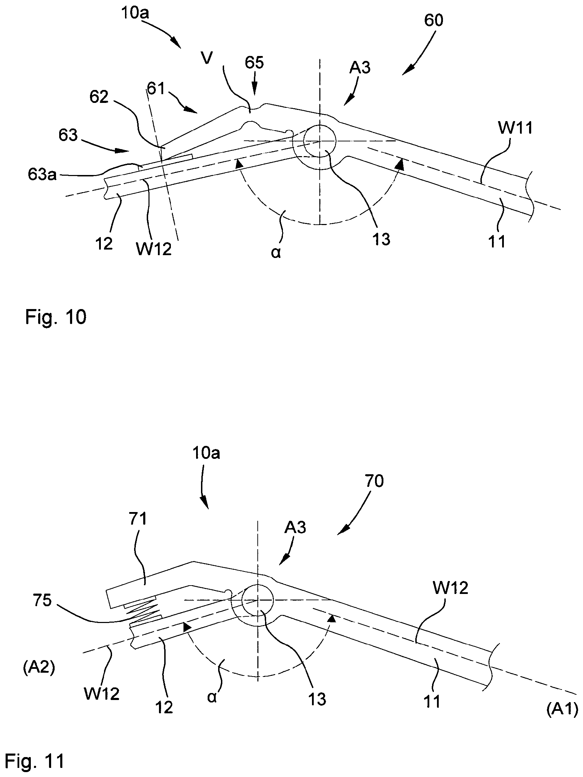

Die Anschlagvorrichtung kann in verschiedener Weise ausgebildet und insbesondere mit einem Anschlaghebel sein. Die Anschlagvorrichtung kann an nur einem Verstellmechanismus, an mehreren Verstellmechanismen oder an sämtlichen Verstellmechanismen einer Versteilvorrichtung 10 vorgesehen sein. In den Figuren 10 und 11 sind jeweils ein Ausführungsbeispiel der Anschlagvorrichtung dargestellt, wobei sich diese dargestellten Ausführungsbeispiele der Anschlagvorrichtung zwischen dem ersten 11 und einem zweiten 12 Verstellhebel wirken, so dass die Wirkungslinien W11 bzw. W12 derselben in der maximalen Ausfahrstellung, die die Anschlagvorrichtung definiert, in einem Winkel alpha (*α*) zueinander verlaufen. Unter Wirkungslinie des ersten Verstellhebels oder des zweiten Verstellhebels 12, 22 wird in diesem Fall die Verbindungslinie zwischen der ersten Achse A11, A21 und der dritten Achse A13, A23 bzw. zwischen der dritten Achse A12, A22 und der zweiten Achse A12, A22 verstanden.

In der Figur 10 ist eine Schnittdarstellung eines Ausführungsbeispiels einer Anschlagvorrichtung 60 an Hand des ersten Verstellmechanismus 10a gezeigt, wobei die Merkmale dieses Ausführungsbeispiel alternativ oder zusätzlich am zweiten Verstellmechanismus 10b vorgesehen sein können. In dem dargestellten Ausführungsbeispiel ist der Anschlaghebel derart an dem Verstellmechanismus vorgesehen, dass dieser zwischen dem ersten Verstellhebel 11 und dem zweiten Verstellhebel 12 wirkt. Dazu ist in dem dargestellten Ausführungsbeispiel ein Anschlaghebel 16 an dem ersten Verstellhebel 11 angeordnet.

Der Anschlaghebel 61 ist einstückig mit dem ersten Verstellhebel 11 und als Verlängerung desselben in Richtung zur zweiten Achse A2 gebildet. Das freie Ende 62 des Anschlaghebels 61 ist zur Anlage an der Oberseite 12a des zweiten Verstellhebels 12 vorgesehen, wenn die Ausfahrstellung der Hochauftriebsklappe K maximal ist, d.h. wenn der die Hochauftriebsklappe K in ihrer maximalen Ausfahrstellung befindet. Als Gegenlage an dem zweiten Verstellhebel 12, auf der der Anschlaghebel 61 aufliegt, wenn der Verstellmechanismus 10a in der maximalen Ausfahrstellung befindet, kann eine Auflagevorrichtung insbesondere in Form einer Auflageplatte 63 vorgesehen sein.

Alternativ oder zusätzlich zu diesem Ausführungsbeispiel kann auch ein Anschlaghebel 16 an dem zweiten Verstellhebel 12 angeordnet sein. Dabei ergeben sich die Merkmale analog zu dem zuvor beschriebenen Ausführungsbeispiel, bei dem der Anschlaghebel 16 an dem ersten Verstellhebel 11 angeordnet ist.

Alternativ oder zusätzlich dazu kann die Anschlagvorrichtung 60, 70 mit einem Anschlaghebel 61, 71 zur Begrenzung der maximalen Ausfahrstellung der Hochauftriebsklappe K derart ausgeführt sein, dass diese zwischen der Hochauftriebsklappe K und dem zweiten Verstellhebel 12, 22 und/oder zwischen dem Hauptflügel H und dem ersten Verstellhebel 11, 21 wirkt.

In der ersten genannten Alternative ist der Anschlaghebel 61, 71 einstückig mit dem zweiten Verstellhebel 12, 22 oder mit einem Beschlag der Hochauftriebsklappe K und als Verlängerung desselben in Richtung zu dem Beschlag der Hochauftriebsklappe K oder zum dritten Gelenk 13, 23 gebildet ist und der derart gestaltet ist, dass das freie Ende 62, 72 des Anschlagshebels 61, 71 in eine Anschlagstellung mit dem Beschlag der Hochauftriebsklappe K oder dem zweiten Verstellhebel 12, 22 gebracht werden kann, um die maximale Ausfahrstellung des jeweiligen Verstellmechanismus 10a, 10b zu definieren.

In der zweiten genannten Alternative ist der Anschlaghebel 61,71 einstückig mit dem jeweiligen ersten Verstellhebel 11, 21 oder mit einem Beschlag des Hauptflügels H und als Verlängerung desselben in Richtung zu dem Beschlag des Hauptflügels H oder zum dritten Gelenk 13, 23 gebildet ist und der derart gestaltet ist, dass das freie Ende 62, 72 des Anschlagshebels 61, 71 in eine Anschlagstellung mit dem Beschlag des

Hauptflügels H oder dem ersten Verstellhebel 11, 21 gebracht werden kann, um die maximale Ausfahrstellung des jeweiligen Verstellmechanismus 10a, 10b zu definieren.

Die Anschlagvorrichtung kann derart gestaltet sein, dass die Anschlagvorrichtung 60,70 eine maximale Ausfahrstellung des Vorflügels begrenzt wird, bei der die Wirkungsrichtungen W11, W12 der Verstellhebel zueinander einen Winkel (alpha) von weniger als 180 Grad und z.B. maximale 179 Grad haben.

Generell kann der Anschlaghebel 61 mit einer Federvorrichtung 65 versehen sein, die insbesondere als Querschnittsverjüngung des Anschlagshebels 61 ausgebildet sein kann. In dem Ausführungsbeispiel nach der Figur 3 wird dadurch erreicht, dass in der Phase, in der die Verstellvorrichtung 10 ihre maximale Ausfahrstellung erreicht, z.B. indem das freie Ende des Anschlagshebels 61 in Anlage mit dem zweiten Verstellhebel oder der Auflageplatte 63 derselben kommt, die dabei entstehenden Anschlagmomente und Anschlagkräfte von dem Anschlagshebel 61 federnd aufgenommen wird. Dadurch wird der Anschlag der Verstellhebel 11,12 bei Erreichen der maximalen Ausfahrstellung der Verstellvorrichtung oder des jeweiligen Verstellmechanismus mit einem federnden Aufnahmeweg versehen und die Anschlagkräfte minimiert. Auf diese Weise können die maximal auftretenden Kräfte bei dem Erreichen des Anschlags in der maximalen Ausfahrstellung reduziert und die Strukturdimensionierung optimiert werden.

Alternativ oder zusätzlich kann die Federvorrichtung auch durch eine z.B. zwischen dem ersten Verstellhebel oder dem zweiten Verstellhebel wirkende Federvorrichtung 75 (Figur 11) gebildet sein, wie dies in dem in der Figur 11 dargestellten Ausführungsbeispiel vorgesehen ist. Wenn die Anschlagvorrichtung 60, 70 zur Begrenzung der maximalen Ausfahrstellung der Hochauftriebsklappe K derart ausgeführt sein soll, dass diese zwischen der Hochauftriebsklappe K und dem zweiten Verstellhebel 12, 22 und/oder zwischen dem Hauptflügel H und dem ersten Verstellhebel 11, 21 wirkt, kann eine Federvorrichtung nach der Figur 11 in analoger Weise auch an dem Hauptflügel 10 oder an der Hochauftriebsklappe K angeordnet sein.

Die Federvorrichtung ist derart angeordnet und ausgeführt, dass diese eine Rückstellkraft auf den jeweiligen Verstellmechanismus bzw. die Hebel des Verstellmechanismus ausübt, mit der der Verstellmechanismus bzw. die Hebel des Verstellmechanismus in ihre eingefahrene Stellung bewegt werden. Auch kann die Federvorrichtung dazu vorgesehen und derart ausgeführt sein, dass diese die Funktion ausübt, um das Erreichen der maximalen Ausfahrstellung des jeweiligen Verstellmechanismus abzufedern.

## Patentansprüche

1. Tragflügel (T) mit einem Hauptflügel (H), einer Hochauftriebsklappe (K), die mittels zumindest zwei in der Spannweitenrichtung des Tragflügels (T) nebeneinander angeordneten und mittels einer Antriebsvorrichtung (50) verstellbaren Verstellmechanismen (1, 2) an dem Hauptflügel (H) bewegbar angeordnet ist, jeder der Verstellmechanismen (10) aufweisend:
- einen ersten Verstellhebel (11, 21), der über ein erstes Drehgelenk (13, 23) unter Ausbildung einer ersten Drehachse (A11, A21) an dem Hauptflügel angelenkt ist,
- einen zweiten Verstellhebel (12, 22), der über ein zweites Drehgelenk (23) unter Ausbildung einer zweiten Drehachse (A21, A22) an der Hochauftriebsklappe (K) angelenkt ist,
- ein drittes Gelenk (15, 25), das den ersten (11, 21) und den zweiten (12, 22) Verstellhebel unter Ausbildung einer dritten Drehachse (A31, A32) gelenkig miteinander verbindet,
wobei die erste, zweite und dritte Drehachse (A11, A12, A13; A21, A22, A23) durch einen gemeinsamen Pol (P) verlaufen, der bei dem Verstellen der Hochauftriebsklappe (K) in Bezug auf die Lage des Hauptflügels fix ist,
**dadurch gekennzeichnet,**
**dass** an zumindest einem der Verstellmechanismen (1, 2) ein Gelenk-Zwischenteil (Z) mit einem Grundkörper (Z1) mit zumindest einer ersten Achsaufnahme und mit einer in Querrichtung des Grundkörpers (Z1) beabstandeten zweiten Achsaufnahme angeordnet und derart ausgebildet ist, dass zwei entlang der Längsrichtung (Z-L1) des Grundkörpers (G) verlaufende Achsenteile in Querrichtung (Z-L2) des Grundkörpers (G) voneinander beabstandet drehbar aufgenommen werden,
wobei das Gelenk-Zwischenteil (Z)
- mit der ersten Achsaufnahme ein erstes Achsenteil unter Ausbildung der ersten Drehachse (A11, A21) und mit der zweiten Achsaufnahme ein viertes Achsenteil unter Ausbildung einer vierten Drehachse (A4-1) zur Kopplung des ersten Verstellhebels (11, 21) und des Hauptflügels (H) an das Gelenk-Zwischenteil (Z) mit einem Achsabstand D zwischen der ersten Drehachse (A11, A21) und der vierten Drehachse (A4-1) drehbar lagert oder
- mit der ersten Achsaufnahme ein zweites Achsenteil unter Ausbildung der zweiten Drehachse (A12, A22) und mit der zweiten Achsaufnahme ein viertes Achsenteil unter Ausbildung einer vierten Drehachse (A4-2) zur Kopplung des zweiten Verstellhebels (12, 22) und der Hochauftriebsklappe (K) an das Gelenk-Zwischenteil (Z) mit einem Achsabstand D zwischen der zweiten Drehachse (A12, A22) und der vierten Drehachse (A4-2) drehbar lagert,
wobei der Grundkörper (Z1)
- einstückig gebildet ist oder
- zweistückig aus zwei jeweils in Querrichtung (Z-L2) des Grundkörpers (Z) verlaufenden Zwischenhebeln (121, 122) gebildet ist, wobei der erste Zwischenhebel (121) über zwei sphärische Drehgelenke (123, 124) gekoppelt ist und der zweite Zwischenhebel (122) über ein sphärisches Lager (126) gekoppelt ist und über ein nicht sphärisches Lager oder drehfest gekoppelt ist.

2. Tragflügel (T) nach einem der vorstehenden Ansprüche, **dadurch gekennzeichnet, dass** das Gelenk-Zwischenteil (Z) derart ausgebildet ist, dass die erste Drehachse (A11, A21) und die vierte Drehachse (A4-1) oder zweite Drehachse (A12, A22) und die jeweils vierte Drehachse (A4-2) jeweils parallel zueinander verlaufen.

3. Tragflügel (T) nach einem der voranstehenden Ansprüche, **dadurch gekennzeichnet, dass** das Gelenk-Zwischenteil (Z) aus einem Grundkörper (Z1) und daran angeordneten zwei Paaren von Achsaufnahmen mit jeweils einer ersten und einer zweiten Achsaufnahme jeweils zur Ausbildung eines Drehlagers mit einer Achse gebildet ist, wobei die jeweils ersten Achsaufnahmen ein Achsteil zur Ausbildung der ersten Drehachse (A11, A21) oder der zweiten Drehachse (A12, A22) drehbar aufnimmt und wobei die jeweils zweiten Achsaufnahmen Achsteile zur Ausbildung der jeweils vierten Drehachse (A4-1, A4-2) drehbar aufnimmt und die erste und die zweite Achsaufnahme jeweils eines Paares von Achsaufnahmen voneinander in der Querrichtung des Gelenk-Zwischenteils (Z) zur Ausbildung des Achsabstands D zwischen den jeweiligen Drehachsen beabstandet sind.

4. Tragflügel (T) nach dem Anspruch 3, **dadurch gekennzeichnet, dass** die Achsaufnahmen des Gelenk-Zwischenteils (Z) in der Längsrichtung desselben zueinander versetzt angeordnet sind.

5. Tragflügel (T) nach dem Anspruch 1, **dadurch gekennzeichnet, dass** der Grundkörper des Gelenk-Zwischenteils (Z, 120) aus zwei sich entlang der Querrichtung erstreckenden Zwischenhebeln (121, 122) gebildet ist, wobei: der erste Zwischenhebel (121) ein Paar von Achsaufnahmen (123a, 124a) mit einer ersten (123a) und einer zweiten (124a) jeweils als sphärische Lager ausgebildete Achsaufnahme jeweils zur Aufnahme eines Achsabschnitts (123b, 124b) aufweist, um das Gelenk-Zwischenteil (Z) an einem ersten Ende (121a) an die Hochauftriebsklappe (K) oder den Hauptflügel (H) und an einem zweiten Ende (121b) an den ersten Verstellhebel (11, 21) oder den zweiten Verstellhebel (12, 22) zu koppeln, und wobei der zweite Zwischenhebel (122) an dem ersten Ende (122a) drehfest mit der Hochauftriebsklappe (K) oder dem Hauptflügel (H) verbunden ist und an dem zweiten Ende (122b) eine als sphärisches Lager ausgebildete Achsaufnahme (126a) aufweist, mit der das zweite Ende (122b) des zweiten Zwischenhebels (122) mit einem Achsabschnitt (126b) des ersten Verstellhebels (11, 21) oder des zweiten Verstellhebels (12, 22) gekoppelt ist.

6. Tragflügel (T) nach dem Anspruch 1, **dadurch gekennzeichnet, dass** der Grundkörper (Z1) des Gelenk-Zwischenteils (Z, 120) aus zwei sich entlang der Querrichtung (Z-L2) erstreckenden Zwischenhebeln (121, 122) gebildet ist, wobei: der erste Zwischenhebel (121) ein Paar von Achsaufnahmen (123a, 124a) mit einer ersten und einer zweiten jeweils als sphärische Lager ausgebildete Achsaufnahme jeweils zur Aufnahme eines Achsabschnitts aufweist, um das Gelenk-Zwischenteil (Z) an einem ersten Ende an den ersten Verstellhebel (11, 21) oder den zweiten Verstellhebel (12, 22) und an einem zweiten Ende an die Hochauftriebsklappe (K) oder den Hauptflügel (H) zu koppeln, und wobei der zweite Zwischenhebel (122) an dem ersten Ende (122a) drehfest mit dem ersten Verstellhebel (11, 21) oder dem zweiten Verstellhebel (12, 22) verbunden ist und an dem zweiten Ende (122b) eine als sphärisches Lager ausgebildete Achsaufnahme aufweist, mit der das zweite Ende des zweiten Zwischenhebels mit einem Achsabschnitt der Hochauftriebsklappe (K) oder des Hauptflügels (H) gekoppelt ist.

7. Tragflügel (T) nach dem Anspruch 1, **dadurch gekennzeichnet, dass** der Grundkörper des Gelenk-Zwischenteils (Z, 130) aus zwei sich entlang der Querrichtung erstreckenden Zwischenhebeln (131, 132) gebildet ist, wobei: der erste Zwischenhebel (131) in der Querrichtung voneinander beabstandete Achsaufnahmen (133a, 134a) mit einer ersten und einer zweiten jeweils als sphärisches Lager ausgebildeten Achsaufnahme jeweils zur drehbaren Aufnahme eines Achsabschnitts (133b, 134b) aufweist, wobei das Gelenk-Zwischenteil (Z) an einem ersten Ende (131a) mit einem Achsabschnitt der Hochauftriebsklappe (K) oder einen Achsabschnitt des Hauptflügels (H) und an einem zweiten Ende (131b) mit einem Achsabschnitt (134b) des ersten Verstellhebels (11, 21) oder des zweiten Verstellhebels (12, 22) gekoppelt ist, und wobei der zweite Zwischenhebel (132) ein Paar von in der Querrichtung (Z-L2) voneinander beabstandete Achsaufnahmen (135a, 136a, 137a) mit zumindest einer ersten als sphärisches Lager ausgebildeten Achsaufnahme (135a) und zumindest einer zweiten als nicht-sphärisches Lager ausgebildeten Achsaufnahme (137a, 138a) jeweils zur drehbaren Aufnahme eines Achsabschnitts (135b, 136b) aufweist, wobei das Gelenk-Zwischenteil (Z) an einem ersten Ende mit einem Achsabschnitt der Hochauftriebsklappe (K) oder einen Achsabschnitt des Hauptflügels (H) und an einem zweiten Ende mit einem Achsabschnitt des ersten Verstellhebels (11, 21) oder des zweiten Verstellhebels (12, 22) gekoppelt ist.

8. Tragflügel (T) nach dem Anspruch 7, **dadurch gekennzeichnet, dass** der zweite Zwischenhebel (132) des Gelenk-Zwischenteils (Z) in der Querrichtung voneinander beabstandete Achsaufnahmen mit einer ersten Achsaufnahme (135a) und zwei zweiten Achsaufnahmen (137a, 138a), die jeweils als nicht-sphärische Lager und zur drehbaren Aufnahme eines Achsabschnitts (136b) ausgebildet sind, wobei das Gelenk-Zwischenteil (Z) an einem ersten Ende mit einem Achsabschnitt der Hochauftriebsklappe (K) oder einen Achsabschnitt des Hauptflügels (H) und an einem zweiten Ende mit einem Achsabschnitt des ersten Verstellhebels (11,21) oder des zweiten Verstellhebels (12, 22) gekoppelt ist.

9. Tragflügel (T) nach dem Anspruch 7, **dadurch gekennzeichnet, dass** der zweite Zwischenhebel (132) des Gelenk-Zwischenteils (Z) in der Querrichtung voneinander beabstandete Achsaufnahmen mit zwei ersten Achsaufnahmen und einer zweiten Achsaufnahme, die jeweils als nicht-sphärische Lager und zur drehbaren Aufnahme eines Achsabschnitts ausgebildet sind, wobei das Gelenk-Zwischenteil (Z) an einem ersten Ende mit einem Achsabschnitt der Hochauftriebsklappe (K) oder einen Achsabschnitt des Hauptflügels (H) und an einem zweiten Ende mit einem Achsabschnitt des ersten Verstellhebels (11, 21) oder des zweiten Verstellhebels (12, 22) gekoppelt ist.

10. Tragflügel (T) nach einem der vorstehenden Ansprüche, **dadurch gekennzeichnet, dass** die Hochauftriebsklappe ein Vorflügel oder ein Slat ist.

11. Tragflügel (T) nach einem der vorstehenden Ansprüche, **dadurch gekennzeichnet, dass** die Hochauftriebsklappe eine Hinterkanten-Klappe ist.

12. Tragflügel (T) nach einem der vorstehenden Ansprüche, **dadurch gekennzeichnet, dass** der Tragflügel (T) eine Anschlagvorrichtung (60, 70) zur Begrenzung der maximalen Ausfahrstellung der Hochauftriebsklappe (K) aufweist und die Anschlagvorrichtung (60, 70) mit einem zwischen dem ersten (11, 21) und dem zweiten (12, 22) Verstellhebel wirkenden Anschlaghebel (61, 71) gebildet ist, der einstückig mit dem ersten Verstellhebel (11,21) oder mit dem zweiten Verstellhebel (12, 22) und als Verlängerung desselben in Richtung zur zweiten Achse (A12, A22) oder zur ersten Achse (A11, A21) gebildet ist und der derart gestaltet ist, dass das freie Ende des Anschlagshebels (61, 71) in eine Anschlagsteilung mit einer Auflagevorrichtung (63, 73) am zweiten Verstellhebel (12, 22) oder am ersten Verstellhebel (11, 21) gebracht werden kann, um die maximale Ausfahrstellung des jeweiligen Verstellmechanismus (10a, 10b) zu definieren.

13. Tragflügel (T) nach einem der vorstehenden Ansprüche, **dadurch gekennzeichnet, dass** der Tragflügel (T) eine Anschlagvorrichtung (60, 70) zur Begrenzung der maximalen Ausfahrsteilung der Hochauftriebsklappe (K) aufweist und die Anschlagvorrichtung (60, 70) mit einem Anschlaghebel (61, 71) zur Begrenzung der maximalen Ausfahrstellung der Hochauftriebsklappe (K) gebildet ist, der einstückig mit dem ersten Verstellhebel (11, 21) oder mit einem Beschlag des Hauptflügels (H) und als Verlängerung desselben in Richtung zu dem Beschlag des Hauptflügels (H) oder zum dritten Gelenk (13, 23) gebildet ist und der derart gestaltet ist, dass das freie Ende (62, 72) des Anschlagshebels (61, 71) in eine Anschlagstellung mit dem Beschlag des Hauptflügels (H) oder dem ersten Verstellhebel (11, 21) gebracht werden kann, um die maximale Ausfahrstellung des jeweiligen Verstellmechanismus (10a, 10b) zu definieren.

## Claims

1. A wing (T) with a main wing (H), a high-lift flap (K), which is movably arranged on the main wing (H) by means of at least two adjustment mechanisms (1, 2) which are arranged next to each other in the span-wise direction of the wing (T) and are adjustable by means of a drive device (50), each of the adjustment mechanisms (10) comprising:
- a first adjustment lever (11, 21), which is articulated on the main wing via a first rotary joint (13, 23) to form a first axis of rotation (A11, A21),
- a second adjustment lever (12, 22), which is articulated on the high-lift flap (K) via a second rotary joint (23) to form a second axis of rotation (A21, A22),
- a third joint (15, 25) which connects the first (11, 21) and the second (12, 22) adjustment lever to each other in an articulated manner to form a third axis of rotation (A31, A32),
wherein the first, second and third axis of rotation (A11, A12, A13; A21, A22, A23) extent through a common pole (P) which is fixed with respect to the position of the main wing when adjusting the high-lift flap (K),
**characterised in that** on at last one of the adjustment mechanisms (1, 2) an intermediate articulated part (Z), which comprises a base body (Z1) with at least one first axle shaft mounting and with a second axle shaft mounting spaced apart in the transverse direction of the base body, is arranged and designed such that two axle shaft elements extending along the longitudinal direction (Z-L1) of the base body (G) are received rotatably and spaced apart from one another in the transverse direction (Z-L2) of the base body (G),
wherein the intermediate articulated part (Z)
- with the first axle shaft mounting rotatably supports a first axle shaft element to form the first axis of rotation (A11, A21) and with the second axle shaft mounting rotatably supports a fourth axle shaft element to form a fourth axis of rotation (A4-1) for purposes of coupling the first adjustment lever (11, 21) and the main wing (H) to the intermediate articulated part (Z), with an axes distance D between the first axis of rotation (A11, A21) and the fourth axis of rotation (A4-2), or
- with the first shaft mounting rotatably supports a second axle shaft element to form the second axis of rotation (A12, A22) and with the second shaft mounting rotatably supports a fourth axle shaft element to form a fourth axis of rotation (A4-2) for purposes of coupling the second adjustment lever (12, 22) and the high-lift flap (K) to the intermediate articulated part (Z), with an axes distance D between the second axis of rotation (A12, A22) and the fourth axis of rotation (A4-2),
wherein the base body (Z1)
- is integrally formed in one piece, or
- is formed in two pieces from two intermediate levers (121, 122) each extending in the transverse direction (Z-L2) of the base body, wherein the first intermediate lever (121) is coupled via two spherical rotary joints (123, 124) and the second intermediate lever (122) is coupled via a spherical bearing (126) and is coupled via a non-spherical bearing or in rotationally fixed manner.

2. Wing (T) according to any of the preceding claims, **characterised in that** that the intermediate articulated part (Z) is designed such that the first axis of rotation (A11, A21) and the fourth axis of rotation (A4-1), or the second axis of rotation (A12, A22) and the respective fourth axis of rotation (A4-2) in each case extend parallel to one another.

3. Wing (T) according to any of the preceding claims, **characterised in that** the intermediate articulated part (Z) is formed from a base body (Z1) and two pairs of axle shaft mountings arranged on the base body, each pair of axle shaft mounting comprises a first and a second axle shaft mounting, each configured to form a rotary bearing with an axis, wherein the respective first axle shaft mountings rotatably receive an axle shaft element to form the first axis of rotation (A11, A21) or the second axis of rotation (A12, A22), and wherein the respective second axle shaft mountings rotatably receive axle shaft elements to form the respective fourth axis of rotation (A4-1, A4-2), and wherein the first and the second axle shaft mounting, each of a pair of axle shaft mountings, are spaced apart from one another in the transverse direction of the intermediate articulated part (Z) to form the axes distance D between the respective axes of rotation.

4. Wing (T) according to claim 3, **characterised in that** the axle shaft mountings of the intermediate articulated part (Z) are arranged such that the axle shaft mountings are displaced relative to one another in the longitudinal direction of the intermediate articulated part.

5. Wing (T) according to claim 1, **characterised in that** the base body of the intermediate articulated part (Z, 120) is formed from two intermediate levers (121, 122) extending in the transverse direction, wherein the first intermediate lever (121) comprises a pair of axle shaft mountings (123a, 124a) with a first (123a) and a second (124a) axle shaft mounting, each fromed as a spherical bearing, wherein each axle shaft mounting is configured to receive a shaft section (123b, 124b), in order to couple the intermediate articulated part (Z) at a first end (121a) to the high-lift flap (K) or the main wing (H),and at a second end (121b) to the first adjustment lever (11, 21) or the second adjustment lever (12, 22), and wherein the second intermediate lever (122) at the first end (122a) is non-rotatably connected to the high-lift flap (K) or the main wing (H), and at the second end (122b) comprises an axle shaft mounting (126a) formed as a spherical bearing, wherein the second end (122b) of the second intermediate lever (122) with an axle shaft section (126b) of the first adjustment lever (11, 21) or the second adjustment lever (12, 22) is coupled to the axle shaft mounting (126a).

6. Wing (T) according to claim 1, **characterised in that** the base body (Z1) of the intermediate articulated part (Z, 120) is formed from two intermediate levers (121, 122) extending in the transverse direction (Z-L2), wherein the first intermediate lever (121) comprises a pair of axle shaft mountings (123a, 124a) with a first and a second shaft mounting, each formed as a spherical bearing and configured to receive a shaft section, in order to couple the intermediate articulated part (Z) at a first end to the first adjustment lever (11, 21) or the second adjustment lever (12, 22), and at a second end to the high-lift flap (K) or the main wing (H), and wherein the second intermediate lever (122) at the first end (122a) is non-rotatably connected to the first adjustment lever (11, 21) or the second adjustment lever (12, 22), and at the second end (122b) comprises an axle shaft mounting formed as a spherical bearing, wherein the second end of the second intermediate lever with a shaft section of the high-lift flap (K) or the main wing (H) is coupled to the axle shaft mounting.

7. Wing (T) according to claim 1, **characterised in that** the base body of the intermediate articulated part (Z, 130) is formed from two intermediate levers (131, 132) extending in the transverse direction, wherein the first intermediate lever (131) comprises axle shaft mountings(133a, 134a), spaced apart from one another in the transverse direction, with a first and a second axle shaft mounting, in each case formed as a spherical bearing and configured to rotatably receive an axle shaft section (133b, 134b), wherein the intermediate articulated part (Z) at a first end (131a) is coupled to a shaft section of the high-lift flap (K) or an axle shaft section of the main wing (H), and at a second end (131b) is coupled to an axle shaft section (134b) of the first adjustment lever (11, 21) or the second adjustment lever (12, 22), and wherein the second intermediate lever (132) comprises a pair of axle shaft mountings (135a, 136a, 137a) spaced apart from one another in the transverse direction (Z-L2), with at least a first axle shaft mounting (135a) formed as a spherical bearing, and with at least a second axle shaft mounting (137a, 138a) formed as a non-spherical bearing, in each case to rotatably receive an axle shaft section (135b, 136b), wherein the intermediate articulated part (Z) is coupled at a first end to an axle shaft section of the high-lift flap (K) or an axle shaft section of the main wing (H), and the intermediate articulated part (Z) is coupled at a second end to an axle shaft section of the first adjustment lever (11, 21) or the second adjustment lever (12, 22).

8. Wing (T) according to claim 7, **characterised in that** the second intermediate lever (132) of the intermediate articulated part (Z) has axle shaft mountings spaced apart from one another in the transverse direction, wherein the axle shaft mountings comprise a first axle shaft mounting (135a) and two second axle shaft mountings (137a, 138a), which in each case are formed as non-spherical bearings and to rotatably receive an axle shaft section (136b), wherein the intermediate articulated part (Z) is coupled at a first end to an axle shaft section of the high-lift flap (K) or an axle shaft section of the main wing (H), and the intermediate articulated part (Z) is coupled at a second end to an axle shaft section of the first adjustment lever (11, 21) or the second adjustment lever (12, 22).

9. Wing (T) according to claim 7, wherein the second intermediate lever (132) of the intermediate articulated part (Z) comprises axle shaft mountings spaced apart from one another in the transverse direction, wherein the axle shaft mountings comprise two first axle shaft mountings and a second axle shaft mountings, which in each case are formed as non-spherical bearings and are configured to rotatably receive an axle shaft section, wherein the intermediate articulated part (Z) is coupled at a first end to an axle shaft section of the high-lift flap (K) or an axle shaft section of the main wing (H), and the intermediate articulated part (Z) is coupled at a second end to an axle shaft section of the first adjustment lever (11, 21) or the second adjustment lever (12, 22).

10. Wing (T) according to any of the preceding claims, **characterised in that** the high-lift flap is a leading edge flap or a slat.

11. Wing (T) according to any of the preceding claims, **characterised in that** the high-lift flap is a trailing edge flap.

12. Wing (T) according to any of the preceding claims, **characterised in that** the wing (T) comprises a stop device (60, 70) configured to limit the maximum extended position of the high-lift flap (K), and wherein the stop device (60, 70) is formed with a stop lever (61, 71) acting between the first (11, 21) and the second (12, 22) adjustment lever, wherein the stop lever (61, 71) is formed in one piece with the first adjustment lever (11, 21) or with the second adjustment lever (12, 22) and is formed as an extension of the same in the direction towards the second axis (A12, A22) or towards the first axis (A11, A21) and wherein the stop lever (61, 71) is configured such that the free end of the stop lever (61, 71) can be brought into a stop position with a bearing surface device (63, 73) on the second adjustment lever (12, 22) or on the first adjustment lever (11, 21) in order to define the maximum extended position of the respective adjustment mechanism (10a, 10b).

13. Wing (T) according to any of the preceding claims, **characterised in that** the wing (T) comprises a stop device (60, 70) configured to limit the maximum extended position of the high-lift flap (K), and the stop device (60, 70) is formed from a stop lever (61, 71) to limit the maximum extended position of the high-lift flap (K), wherein the stop lever (61, 71) is formed in one piece with the first adjustment lever (11, 21) or with a fitting of the main wing (H) and is formed as an extension of the same in the direction towards the fitting of the main wing (H) or towards the third articulation (13, 23), and wherein the stop lever (61, 71) is configured such that the free end (62, 72) of the stop lever (61, 71) can be brought into a stop position with the fitting of the main wing (H) or the first adjustment lever (11, 21) so as to define the maximum extended position of the respective adjustment mechanism (10a, 10b).

## Revendications

1. Aile porteuse (T), dotée d'une aile principale (H), d'un volet hypersustentateur (K), qui au moyen d'au moins deux mécanismes d'ajustage (1, 2) placés côte à côte dans la direction de portée de l'aile porteuse (T) et ajustables au moyen d'un dispositif d'entraînement (50) est placé de manière mobile sur l'aile principale (H), chacun des mécanismes d'ajustage (10) comportant :
- un premier levier d'ajustage (11, 21), qui par l'intermédiaire d'une première articulation rotative (13, 23) est articulé sur l'aile principale, en créant un premier axe de rotation (A11, A21),
- un deuxième levier d'ajustage (12, 22), qui par l'intermédiaire d'une deuxième articulation rotative (23) est articulé sur le volet hypersustentateur (K) en créant un deuxième axe de rotation (A21, A22),
- une troisième articulation (15, 25) qui relie de manière articulée l'un à l'autre le premier (11, 21) et le deuxième (12, 22) leviers d'ajustage, en créant un troisième axe de rotation (A31, A32),
le premier, le deuxième et le troisième axes de rotation (A11, A12, A13 ; A21, A22, A23) s'écoulant à travers un pôle commun (P), qui lors de l'ajustage du volet hypersustentateur (K) est fixe en rapport à la position de l'aile principale,
**caractérisée en ce que**
sur au moins l'un des mécanismes d'ajustage (1, 2), une pièce d'articulation intermédiaire (Z), pourvue d'un corps de base (Z1) avec au moins un premier logement d'axe et avec un deuxième logement d'axe éloigné dans la direction transversale du corps de base (Z1) est placée et conçue de telle sorte que deux parties d'axe s'écoulant le long de la direction longitudinale (Z-L1) du corps de base (G) soit logées de manière rotative, en étant écartées dans la direction transversale (Z-L2) du corps de base (G),
la pièce d'articulation intermédiaire (Z) logeant de manière rotative
- par le premier logement d'axe, en créant le premier axe de rotation (A11, A21), une première partie d'axe et par le deuxième logement d'axe, en créant un quatrième axe de rotation (A4-1), une quatrième partie d'axe, pour l'accouplement du premier levier d'ajustage (11, 21) et de l'aile principale (H) sur la pièce d'articulation intermédiaire (Z) avec un entraxe D entre le premier axe de rotation (A11, A21) et le quatrième axe de rotation (A4-1) ou
- par le premier logement d'axe, en créant le deuxième axe de rotation (A12, A22), une deuxième partie d'axe et par le deuxième logement d'axe, en créant un quatrième axe de rotation (A4-2), une quatrième partie d'axe, pour l'accouplement du deuxième levier d'ajustage (12, 22) et du volet hypersustentateur (K) sur la pièce d'articulation intermédiaire (Z) avec un entraxe D entre le deuxième axe de rotation (A12, A22) et le quatrième axe de rotation (A4-2),
le corps de base (Z1)
- étant créé d'une seule pièce ou
- étant créé en deux pièces à partir de deux leviers intermédiaires (121, 122) s'écoulant chacun dans la direction transversale (Z-L2) du corps de base (Z), le premier levier intermédiaire (121) étant accouplé par l'intermédiaire de deux articulations rotatives (123, 124) sphériques et le deuxième levier intermédiaire (122) étant accouplé par l'intermédiaire d'un palier sphérique (126) et étant accouplé par l'intermédiaire d'un palier non sphérique ou de manière solidaire en rotation.

2. Aile porteuse (T) selon l'une quelconque des revendications précédentes, **caractérisée en ce que** la pièce d'articulation intermédiaire (Z) est conçue de telle sorte que le premier axe de rotation (A11, A21) et le quatrième axe de rotation (A4-1) ou le deuxième axe de rotation (A12, A22) et respectivement le quatrième axe de rotation (A4-2) s'écoulent chaque fois à la parallèle l'un de l'autre.

3. Aile porteuse (T) selon l'une quelconque des revendications précédentes, **caractérisée en ce que** la pièce d'articulation intermédiaire (Z) est formée d'un corps de base (Z1) et de deux paires de logements d'axe placées sur celui-ci, avec chacune un premier et un deuxième logements d'axe, chaque fois pour créer un pivot avec un axe, les premiers logements d'axe respectifs recevant de manière rotative une partie d'axe pour créer le premier axe de rotation (A11, A21) ou le deuxième axe de rotation (A12, A22) et les deuxièmes logements d'axe respectifs recevant de manière rotative des parties d'axe pour créer le quatrième axe de rotation (A4-1, A4-2) respectif et le premier et le deuxième logements d'axe de chaque fois une paire de logements d'axe étant écartés l'un de l'autre dans la direction transversale de la pièce d'articulation intermédiaire (Z), pour créer l'entraxe D entre les axes de rotation respectifs.

4. Aile porteuse (T) selon la revendication 3, **caractérisée en ce que** les logements d'axe de la pièce d'articulation intermédiaire (Z) sont placés en décalage mutuel dans la direction longitudinale de celle-ci.

5. Aile porteuse (T) selon la revendication 1, **caractérisée en ce que** le corps de base de la pièce d'articulation intermédiaire (Z, 120) est formé de deux leviers intermédiaires (121, 122) s'étendant le long de la direction transversale : le premier levier intermédiaire (121) comportant une paire de logements d'axe (123a, 124a) avec un premier (123a) et un deuxième logements d'axe (124a), conçus chacun sous la forme d'un palier sphérique, pour loger chacun un tronçon d'axe (123b, 124b), pour accoupler la pièce d'articulation intermédiaire (Z) par une première extrémité (121a) avec le volet hypersustentateur (K) ou avec l'aile principale et par une deuxième extrémité (121b) avec le premier levier d'ajustage (11, 21) ou avec le deuxième levier d'ajustage (12, 22), et le deuxième levier intermédiaire (122) étant assemblé par la première extrémité (122a) de manière solidaire en rotation avec le volet hypersustentateur (K) ou avec l'aile principale (H) et sur la deuxième extrémité (122b) comportant un logement d'axe (126a) conçu sous la forme d'un palier sphérique, par lequel la deuxième extrémité (122b) du deuxième levier intermédiaire (122) est accouplée avec un tronçon d'axe (126b) du premier levier d'ajustage (11, 21) ou du deuxième levier d'ajustage (12, 22).

6. Aile porteuse (T) selon la revendication 1, **caractérisée en ce que** le corps de base (Z1) de la pièce d'articulation intermédiaire (Z, 120) est formé de deux leviers intermédiaires (121, 122) s'étendant le long de la direction transversale (Z-L2) : le premier levier intermédiaire (121) comportant une paire de logements d'axe (123a, 124a) avec un premier et un deuxième logements d'axe, conçus respectivement sous la forme de paliers sphériques, pour loger chacun un tronçon d'axe, pour accoupler la pièce d'articulation intermédiaire (Z) par une première extrémité avec le premier levier d'ajustage (11, 21) ou avec le deuxième levier d'ajustage (12, 22) et par une deuxième extrémité avec le volet hypersustentateur (K) ou avec l'aile principale (H), et le deuxième levier intermédiaire (122) étant assemblé par la première extrémité (122a) de manière solidaire en rotation avec le premier levier d'ajustage (11, 21) ou avec le deuxième levier d'ajustage (12, 22) et sur la deuxième extrémité (122b) comportant un logement d'axe conçu sous la forme d'un palier sphérique, par lequel la deuxième extrémité du deuxième levier intermédiaire est accouplée avec un tronçon d'axe du volet hypersustentateur (K) de l'aile principale (H).

7. Aile porteuse (T) selon la revendication 1, **caractérisée en ce que** le corps de base de la pièce d'articulation intermédiaire (Z, 130) est formé de deux leviers intermédiaires (131, 132) s'étendant le long de la direction transversale : le premier levier intermédiaire (131) comportant des logements d'axe (133a, 134a) écartés l'un de l'autre dans la direction transversale, avec un premier et un deuxième logements d'axe, conçus chacun sous la forme d'un palier sphérique, pour loger chacun de manière rotative un tronçon d'axe (133b, 134b), la pièce d'articulation intermédiaire (Z) étant accouplée par une première extrémité (131a) avec un tronçon d'axe du volet hypersustentateur (K) ou avec un tronçon d'axe de l'aile principale (H) et par une deuxième extrémité (131b) avec un tronçon d'axe (134b) du premier levier d'ajustage (11, 21) ou du deuxième levier d'ajustage (12, 22) et le deuxième levier intermédiaire (132) comportant une paire de logements d'axe (135a, 136a, 137a), écartés l'un de l'autre dans la direction transversale (Z-L2), avec au moins un premier logement d'axe (135a) conçu sous la forme d'un palier sphérique et au moins un deuxième logement d'axe (137a, 138a) conçu sous la forme d'un palier non sphérique, chacun pour recevoir de manière rotative un tronçon d'axe (135b, 136b), la pièce d'articulation intermédiaire (Z) étant accouplée par une première extrémité avec un tronçon d'axe du volet hypersustentateur (K) ou avec un tronçon d'axe de l'aile principale (H) et par une deuxième extrémité avec un tronçon d'axe du premier levier d'ajustage (11, 21) ou du deuxième levier d'ajustage (12, 22).

8. Aile porteuse (T) selon la revendication 7, **caractérisée en ce que** le deuxième levier intermédiaire (132) de la pièce d'articulation intermédiaire (Z) comporte des logements d'axe écartés les uns des autres dans la direction transversale, avec un premier logement d'axe (135a) et deux deuxièmes logements d'axe (137a, 138a), qui sont conçus chacun sous la forme d'un palier non sphérique et pour loger de manière rotative un tronçon d'axe (136b), la pièce d'articulation intermédiaire (Z) étant accouplée par une première extrémité avec un tronçon d'axe du volet hypersustentateur (K) ou avec un tronçon d'axe de l'aile principale (H) et par une deuxième extrémité avec un tronçon d'axe du premier levier d'ajustage (11, 21) ou du deuxième levier d'ajustage (12, 22).

9. Aile porteuse (T) selon la revendication 7, **caractérisée en ce que** le deuxième levier intermédiaire (132) de la pièce d'articulation intermédiaire (Z) comporte des logements d'axes écartés les uns des autres dans la direction transversale, avec deux premiers logements d'axe et un deuxième logement d'axe, qui sont conçus chacun sous la forme de paliers non sphériques et pour loger de manière rotative un tronçon d'axe, la pièce d'articulation intermédiaire (Z) étant accouplée par une première extrémité avec un tronçon d'axe du volet hypersustentateur (K) ou avec un tronçon d'axe de l'aile principale (H) et par une deuxième extrémité avec un tronçon d'axe du premier levier d'ajustage (11, 21) ou du deuxième levier d'ajustage (12, 22).

10. Aile porteuse (T) selon l'une quelconque des revendications précédentes, **caractérisée en ce que** le volet hypersustentateur est un volet de bord d'attaque ou un slat.

11. Aile porteuse (T) selon l'une quelconque des revendications précédentes, **caractérisée en ce que** le volet hypersustentateur est un volet de bord de fuite.

12. Aile porteuse (T) selon l'une quelconque des revendications précédentes, **caractérisée en ce que** l'aile porteuse (T) comporte un dispositif de butée (60, 70) destiné à limiter la position de déploiement maximal du volet hypersustentateur (K) et **en ce que** le dispositif de butée (60, 70) est formé d'un levier de butée (61, 71) agissant entre le premier (11, 21) et le deuxième (12, 22) leviers d'ajustage, qui est formé d'une seule pièce avec le premier levier d'ajustage (11,21) ou avec le deuxième levier d'ajustage (12, 22) et en tant que prolongement de celui-dans la direction du deuxième axe (A12, A22) ou du premier axe (A11, A21) et qui est conçu de telle sorte que l'extrémité libre du levier de butée (61, 71) puisse être amenée dans une position de butée avec un dispositif d'appui (63, 73) sur le deuxième levier d'ajustage (12, 22) ou sur le premier levier d'ajustage (11, 21), pour définir la position de déploiement maximal du mécanisme d'ajustage (10a, 10b) respectif.

13. Aile porteuse (T) selon l'une quelconque des revendications précédentes, **caractérisée en ce que** l'aile porteuse (T) comporte un dispositif de butée (60, 70) destiné à limiter la position de déploiement maximal du volet hypersustentateur (K) et **en ce que** le dispositif de butée (60, 70) est formé avec un levier de butée (61, 71) pour limiter la position de déploiement maximal du volet hypersustentateur (K), qui est formé d'une seule pièce avec le premier levier d'ajustage (11, 21) ou avec une ferrure de l'aile principale (H) et en tant que prolongement de celui (celle)-ci dans la direction de la ferrure de l'aile principale (H) ou de la troisième articulation (13, 23) et qui est conçu de telle sorte que l'extrémité libre (62, 72) du levier de butée (61, 71) puisse être amenée dans une position de butée avec la ferrure de l'aile principale (H) ou avec le premier levier d'ajustage (11, 21), pour définir la position de déploiement maximal du mécanisme d'ajustage (10a, 10b) respectif.
